(19) Europäisches Patentamt

European Patent Office

Office européen des brevets

(11) Veröffentlichungsnummer: **0 267 305**

**A1**

(12) **EUROPÄISCHE PATENTANMELDUNG**

(21) Anmeldenummer: 86115580.2

(22) Anmeldetag: 10.11.86

(51) Int. Cl.⁴: **B60H 1/00** , B60H 1/22

(43) Veröffentlichungstag der Anmeldung:
18.05.88 Patentblatt 88/20

(84) Benannte Vertragsstaaten:
**AT CH DE LI**

(71) Anmelder: **Marquardt, Hermann**
**Stossbühlgasse 14**
**D-7200 Tuttlingen(DE)**

(72) Erfinder: **Marquardt, Hermann**
**Stossbühlgasse 14**
**D-7200 Tuttlingen(DE)**

(74) Vertreter: **Bierl, Richard, Dr. rer. nat.,**
**Dipl.-Phys.**
**Hauptstrasse 32/I**
**D-7218 Trossingen 1(DE)**

(54) **Heizvorrichtung für ein Kraftfahrzeug mittels Einleitung von Warmluft aus einem elektrischen Gebläse.**

㊗ Bei einer Heizvorrichtung für ein Kraftfahrzeug mittels Einleitung von Warmluft aus einem elektrischen Gebläse in das Innere der Fahrgastzelle während der Parkzeit in einem kalten Raum oder im freien Raum während der kalten Jahreszeit besteht die Erfindung als jederzeit und wiederholt nachrüstbares Einsatzteil zwischen Türrahmen (9) und versenkbarem Seitenfenster (15) mit einem Träger (11) in Form eines Rohrprofils von rechteckigem Querschnitt, das im Türrahmen (9) oben und seitlich fest verankert bzw. im Schiebe-bis Haftsitz einpaßbar ist,

wobei das Einsatzteil (14) in die Nut (10) der nunmehr entfallenen Scheibe (15) aufgenommen und die Scheibe (15) in die Nut eines U-Profilstücks (16) einschiebbar ist, die Innen-und die Außenwand des Einsatzteils je eine zu der anderen konzentrischen Öffnung für die Durchführung eines zweiteiligen Rohrstutzens (12, 13) enthält, so daß die Außenwand zwischen beiden Teilen des Rohrstutzens (12, 13) festgeklemmt wird,

und daß auf das Rohrstück (12) am anderen Ende ein biegsamer Schlauch aufpaßbar ist, dessen Gegenende auf die Blasluft-Öffnung des Heißluftgebläses den Sicherheits-Vorschriften für das Produkt genügen muß und in vorschriftsmäßiger Weise an eine geeignete Stromversorgungsquelle angeschlossen und gegen unsachgemäßen oder unerlaubten Betrieb gesichert ist.

FIG.2

## Heizvorrichtung für ein Kraftfahrzeug mittels Warmluft aus einem elektrischen Gebläse

Die vorliegende Erfindung betrifft eine Heizvorrichtung für ein Kraftfahrzeug mitels Einleitung von Warmluft aus einem elektrischen Gebläse in das Innere der Fahrgastzelle während der Parkzeit in einem kalten Raum oder im Freien in der kalten Jahreszeit.

Beim Parken von Kraftfahrzeugen tritt in der kalten Jahreszeit, vor allem im Freien, aber auch gelegentlich im Falle einer unzureichenden Garage das Problem auf, daß die Scheiben über Nacht zufrieren und dann von Schnee oder teilweise sogar von Eis freigekratzt werden müssen, was nicht nur einen erheblichen Zeitaufwand vor Beginn der Arbeitszeit erfordert, sondern auch anschließend zum Antritt der Fahrt mit nicht völlig durchsichtigen Scheiben verleitet. Scheibenwischer sind in diesem Falle der zugefrorenen Scheiben nicht brauchbar und sind auch im Falle von nicht völlig von Schnee befreiten Glasflächen der Gefahr einer verfrühten Beschädigung. oder Unbrauchbarkeit ausgesetzt.

Vielfach ist eine provisorische Heizvorrichtung - schon an die Batterie des Fahrzeugs angeschlossen worden, das Ein-und Ausschalten erfordert. jedoch besondere Vorkehrungen und auch Vorsichtsmaßnahmen. In anderen Fällen hat man - schon einen elektrischen Heizofen, am Starkstromnetz angeschlossen, in das Wageninnere gestellt, was aber natürlich nicht nur unzulässig, sondern auch gefährlich ist. Die schlechteste Maßnahme, das Fahrzeug vor Antritt der Fahrt aufzuheizen, ist diejenige, den Motor einige Zeit vorher leer laufen zu lassen, wobei nicht nur unnötig Kraftstoff verbraucht wird, sondern auch Umweltschäden verursacht werden. Einen gewissen Vorteil demgegenüber haben die sogenannten Fußbodenheizungen für die Fahrgastzelle, die an das Kühlwasser angeschlossen sind und wenigstens solange eine Heizung bewirken, als die Kühlwasser-Temperatur über 40° bleibt; bei längerem Stehen und insbesondere bei schärferer Kälte kühlt das Kühlwasser aber schnell ab, so daß dann unter Umständen ebenfalls der Motor im Leerlauf betrieben werden muß.

Der vorliegenden Erfindung liegt die Aufgabe zugrunde, die vorstehend beschriebenen Probleme sachgemäß zu lösen. Diese Aufgabe wird gelöst durch die in Anspruch 1 beschriebene Vorrichtung und die damit zusammenhängenden Maßnahmen.

Die Erfindung vermittelt eine ganze Reihe von Vorteilen und Erleichterungen des Betriebs eines Kraftfahrzeugs außerhalb des Fahrens. Die Aufheizung der Fahrgastzelle, dh. die Einschaltung des Warmluftgebläses kann jederzeit über die Zeitschaltuhr zu gewünschter Zeit vor Antritt der Fahrt in Betrieb genommen werden, wenn dies rechtzeitig und an die Temperaturverhältnisse und die Zeitbedingungen angepaßt vorgenommen wird, dann kann damit gerechnet werden, daß die Scheiben frei von Schnee und Eis sind. Im Gegensatz zu dem an sich nicht erlaubten Leerlaufbetriebes wird auch die Batterie des Autos geschont, zumal das Warmluftgebläse nicht an diese Stromquelle angeschlossen wird. Im Falle des Wechsels des Kraftfahrzeuges braucht lediglich das relativ einfache und aufwandssparame Einsatzteil ausgetauscht oder angepaßt zu werden. Die übrigen Teile der Anlage können bei einem solchen Fahrzeugwechsel bleiben. Die im Falle des Vorheizens des Fahrzeugs in der geschlossenen Garage durch Leerlauf, was ebenfalls an sich verboten ist, auftretenden Abgase werden in vollem Umfange vermieden. Da kein Teil der Heizvorrichtung mit kritischen Betriebsei genschäften, zB. Stromversorgung, Schaltungsfunken usw. in der Fahrgastzelle untergebracht ist, ist eine Brandgefahr völlig ausgeschlossen.

Die erfindungsgemäße Heizvorrichtung läßt sich ohne Schwierigkeiten auch dahingehend ergänzen, daß trotz dieser Verbesserung die notwendige Sicherheit gegen Einbruch und Diebstahl gewährleistet ist. So sind alle Komponenten, die einerseits zu der Heizvorrichtung selbst gehören und andererseits zu dem Zubehör, ohne Ausnahme darauf vorbereitet bzw. ohne weiteres so vorzubereiten, daß die erforderlichen Verbindungen zwischen Rohrstutzen und Schlauch, sowie Rohrstutzen und Befestigungsteilen und schließlich Stromversorgungsteilen und deren Schaltelementen in an sich bekannter Weise gegen unbefugtes Entfernen, Lösen, Trennen oder Betätigen gesichert sind. Diese Maßnahmen umfassen einfache handwerkliche Verstiftungen, Splinte, Verschraubungen und verschließbare Gehäuse, wozu es weiterer Erläuterungen nicht bedarf. Erfindungswesentlich ist lediglich die Tatsache, daß alle notwendigen Bedingungen erfüllt sind, um diese Sicherungsmaßnahmen in einfacher Weise zu realisieren.

Ein Ausführungsbeispiel der Erfindung ist im nachfolgenden anhand der Zeichnung detailliert beschrieben; es stellen dar:

Fig.1: Eine Außenansicht der Heizvorrichtung im eingebauten Zustand, wobei das hintere Seitenfenster so geöffnet und dann geschlossen ist, daß die Heizvorrichtung luftdicht zwischen Türrahmen und versenkbarem Fenster eingeklemmt ist;

Fig.2: ein Querschnitt in Details der eigentlichen Heizvorrichtung mit den Rohranschlüssen und auf einem Vierkantrohr aufgesetzten Winkel bzw. U-Profilen;

Fig.3: eine stark vereinfachte Darstellung der Einzelheit am Wagenfenster mit eingesetzter Heizvorrichtung und Warmluftgebläse in einem Gehäuse mit Rohrstutzenanschluß und dazwischen angeordnetem biegsamen Schlauch (unterbrochen gezeichnet).

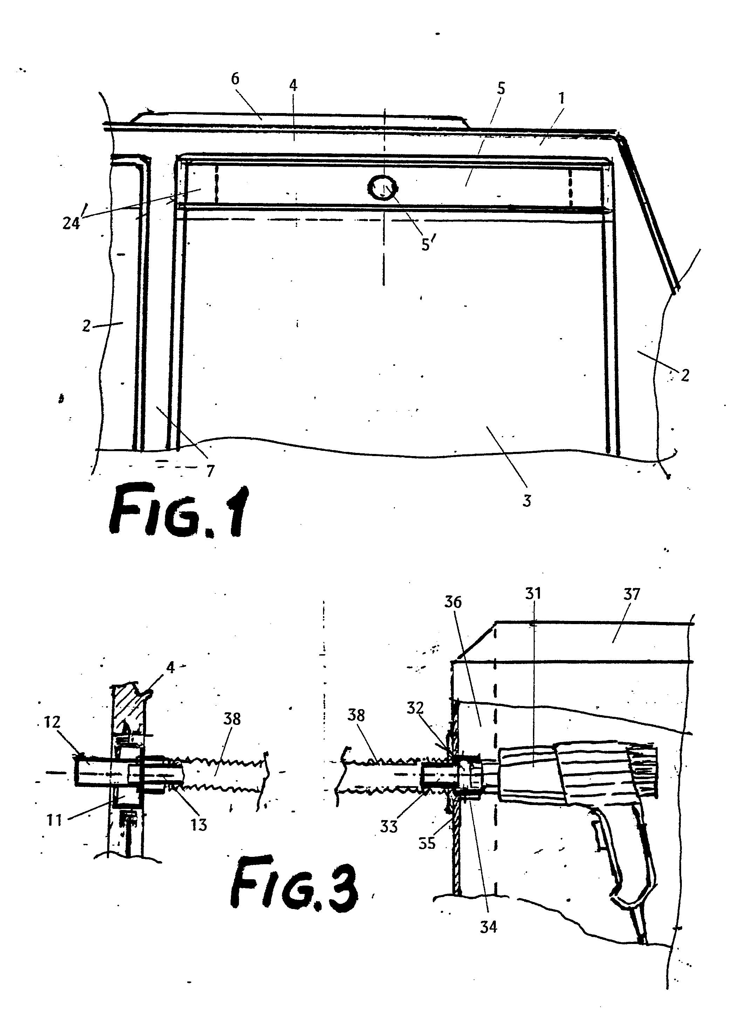

In Fig. 1 ist die Karosserie des für das Ausführungsbeispiel verwendeten Kraftfahrzeugs in einer ausschnittartigen Seitenansicht dargestellt, wobei der Türrahmen 1 mit dem vorderen 2 und dem hinteren Seitenfenster 3 so sichtbar ist, daß das hintere Seitenfenster 3 so weit versenkt und wieder hochgeschoben ist, daß zwischen ihm und dem oberen Längsholmen 4 die Heizvorrichtung luftdicht eingefaßt ist. Zur Verdeutlichung sei gesagt, daß das Autodach 6 mit Ziff.6 bezeichnet ist. In den Türrahmen 7 und 8 sind die üblichen Nuten eingefügt, in welchen nichtdargestellte Seitenvorsprünge der Heizvorrichtung geführt sind.

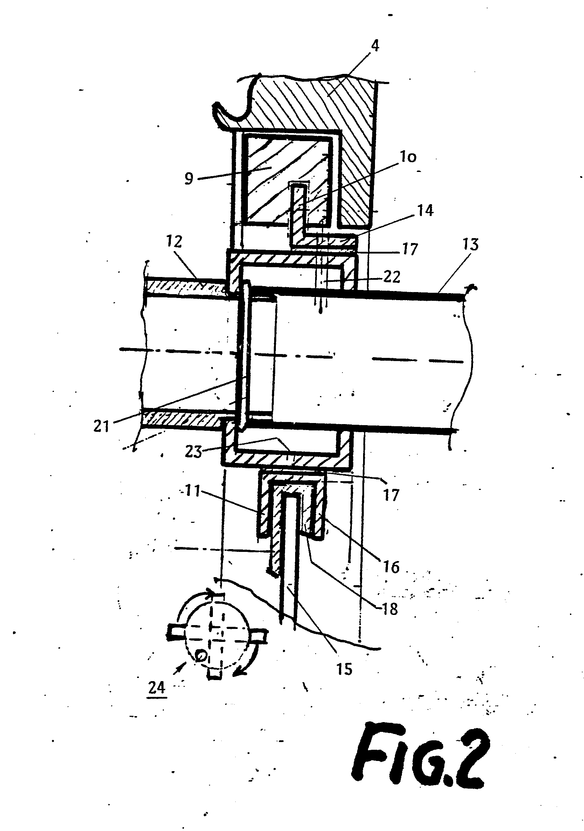

In Fig.2, einem mehrfach gebrochenen Schnitt durch die wichtigsten Teile der Heizvorrichtung, ist, ebenfalls geschnitten gezeichnet, der obere Längsholmen 4 wiedergegeben mit der Längsfütterung 9, die mit der senkrechten Nut 10 ausgestattet ist, die bei normaler Verwendung des Kraftfahrzeugs ohne Heizvorrichtung als Einlaß für das Seitenfenster dient. Der eigentliche Träger 11 der Heizvorrichtung mit dem Rohrstutzen 12 für die Zuführung der Warmluft von außen und dem in das Wageninnere führenden Rohrstutzen 13 ist als Rohrprofil ausgebildet und mittels des L-Längsprofilstabs 14 an seiner oberen Längsfläche und mittels dem U-Profilstück 16, ebenfalls über die ganze Länge der Scheibe 15 des hinteren Seitenfensters 3, eingefaßt. Zum Ausgleich von Passungstoleranzen sind zwischen dem L-Längsprofilstab 14 und dem Rohrprofil des Trägers 11 eine Zwischenlage 17 aus elastischem Werkstoff einerseits, zwischen der unteren Fläche des Rohrprofils 11 und dem U-Profilstück 16 ebenfalls eine Zwischenlage 18 andererseits aus elastischem Werkstoff eingefügt; außerdem ist die Scheibe 15 des hinteren Seitenfensters 3 in dem U-Profilstück mittels eines elastischen Futters 19 eingebettet.

Der nach außen führende Rohrstutzen 12 ist gegen Herausfallen und vor allem gegen unbefugte Entfernung mittels des Splints 21 gesichert, gegen den der innere Rohrstutzen 13 angepreßt eingeschoben und durch die gestrichelt angedeutete Verschraubung 22 ebenfalls wieder gegen unerwünschtes Lösen und unbefugte Entfernung gesichert ist. Das gleiche gilt für die Verbindung des U-Profils 16 mit dem Rohrprofil 11 mittels der Verschraubung 23. Wegen dieser Sicherungsmaßnahmen, die eine verhältnismäßig starre Verbindung der Teile erfordert, sind die diversen beschriebenen elastischen Zwischenlagen und Futter erforderlich, weil es sich bei der Scheibe 15 des hinteren Fensters immerhin um ein im gewissen Grade zerbrechliches Material handelt.

Durch die schematisch dargestellte Einzelheit 24 soll beispielsweise angedeutet sein, wie die Verbindung der Rohrstutzen 12 und 13 zusätzlich durch Nasen und Schlitze mittels Verdrehung der Rohrstutzen gesichert sein kann.

In Fig.3 ist links in stark vereinfachter Form die in die Seitenwand des Kraftfahrzeugs mit dem Längsholmen 4 eingebaute Heizvorrichtung, bestehend aus dem als Rohrprofil ausgebildeten Träger 11, den Rohrstutzen 12 und 13 zusammengesetzten Heizvorrichtung und rechts das Gegenstück für die Versorgung der Heizvorrichtung mit Warmluft durch das Elektrogebläse 31 wiedergegeben, ebenfalls wieder mit Rohrstutzen 32, deren einer 33 mit dem anderen 34 unter Zwischenklemmung 35 der Seitenwand 36 des Gehäuses 37 eingebaut sind. Die jeweils außenseitigen Rohrstutzen 13 bzw. 33 sind miteinander durch den biegsamen Schlauch 38 verbunden. In dem Gehäuse 37, das seinerseits auch mit einem Sicherungsverschluß ausgestattet ist, sind außer dem Elektrogebläse 31 auch die elektrischen Zusatzeinrichtungen, wie Stromquellenanschluß, Ein-/Ausschalter, Schaltuhr usw. -nicht dargestellt - eingebaut.

**Ansprüche**

1. Heizvorrichtung für ein Kraftfahrzeug mittels Einleitung von Warmluft aus einem elektrischen Gebläse in das Innere der Fahrgastzelle während der Parkzeit in einem kalten Raum oder im Freien während der kalten Jahreszeit,
dadurch gekennzeichnet,
daß sie als jederzeit und wiederholt nachrüstbares Einsatzteil zwischen Türrahmen (1, 6, 7) und versenkbarem Seitenfenster (3) mit einem Träger (11) in Form eines Rohrprofils von rechteckigem Querschnitt ausgebildet ist, das im Türrahmen (1, 6, 7) von gleicher Dicke wie dieser oben und seitlich fest verankert bzw. im Schiebe-bis Haftsitz einpaßbar und an der Unterfläche mit einem U-Profilstück (16), das mit einem elastischen Futter zur Dichtung für den Einlaß der Scheibe (15) des Seitenfensters aufgefüttert ist, ausgestattet ist,
wobei an der Oberseite des Trägers (11) von Rohrprofil mit Zwischenlage (18) aus elastischem Werkstoff ein Längsprofilstab (14) von gleicher Länge und Dicke anstelle der Scheibe des Seitenfensters in das Längsfutter (9) einlaßbar ist, so daß das Einsatzteil in die Nut der nunmehr entfallenen Scheibe seitlich durch die Hartschaumkissen abgedichtet (24') aufgenommen und die Scheibe in die Nut des U-Profilstücks (16) einschiebbar ist,
schließlich daß die Innen-und Außenwand des Einsatzteils je eine zu der anderen konzentrische Öffnung 51 für die Durchführung eines zweiteiligen Rohrstutzens (12, 13) mit Anschlagsabsatz an dem einen Teil und einem unter Schiebebis Haftsitz darauf aufsteckbaren durch die Innenwand durchreichenden Rohrstück (13) als anderen Teil, enthält, so daß die Außenwand zwischen beiden Teilen des Rohrstutzens festgeklemmt wird,

und daß auf das Rohrstück (12) am anderen Ende ein biegsamer Schlauch (38) aufpaßbar ist, dessen Gegenende in einem ähnlich zweiteiligen, in eine Seitenwand eines Gehäusekastens (37) eingefügten Rohrstutzen (33,34) und dessen Gegenende auf die Blasluft-Öffnung des Heißluftgebläses (31) aufsteckbar ist, das in üblicher Weise den Sicherheits-Vorschriften für das Produkt genügen muß und das in vorschriftsmäßiger Weise über Zeitschalter bzw. eine Schaltuhr und über Ein-/Ausschalter an eine geeignete Stromversorgungsquelle angeschlossen und gegen unsachgemäßen oder unerlaubten Betrieb gesichert ist.

2. Heizvorrichtung nach Anspruch 1, dadurch gekennzeichnet, daß die Rohrstutzen (12, 13) durch einen Anschlag und gegebenenfalls zusätzlich einen Splint (21) beidseitig der Wand des Rohrprofils von rechteckigem Querschnitt gegenseitig verspannt festgehalten wird.

3. Heizvorrichtung nach einem der Ansprüche 1 und 2, dadurch gekennzeichnet, daß die Rohrstutzen (12, 13) miteinander und/oder mit dem L-Längsprofilstab und/oder dem U-Profilstück unter Zwischenlage eines Streifens (17, 18) aus elastischem Werkstoff verbunden sind.

4. Heizvorrichtung nach einem der Ansprüche 1 bis 3, dadurch gekennzeichnet, daß der Hohlraum des Trägers (11) mit Rohrprofil an den seitlichen Enden durch ein Hartschaumpolster (5a) gegenüber den Nuten im Türrahmen abgedichtet ist.

5. Heizvorrichtung nach einem der Ansprüche 1 bis 4, dadurch gekennzeichnet, daß die Scheibe (15) des hinteren Seitenfensters in dem U-Profilstück (16) an der Unterfläche des als Träger (11) dienenden Rohrprofils von rechteckigem Querschnitt in einem Dichtungsgummi als elastisches Futter (17) eingeführt ist.

6. Heizvorrichtung nach einem der Ansprüche 1 bis 5, dadurch gekennzeichnet, daß die für die Versorgung mit Warmluft eingesetzten Teile, zB. das Warmluftgebläse (31), die zugehörigen Anschluß- und Schalteinrichtungen usw. in einem abschließbaren Gehäuse montiert und die zugehörigen Verbindungsteile gegeneinander gegen unbefugtes Lösen und Entfernen gesichert mit ortsfesten Teilen verbunden untergebracht sind.

Anm.-Nr.: ........................
Aktenzeichen: ....................

0 267 305

"Heizvorrichtung für ein Kraftfahrzeug"
Anm.: H.Marquardt, D-7200  Tuttlingen

172 1o1 - DrBi/bp - o6.Nov.1986
Zeichnung - Blatt 1

**FIG.1**

**FIG.3**

0 267 305

Anm.-Nr.: .........................
Aktenzeichen: ......................

"Heizvorrichtung für ein Kraftfahrzeug"
Anm.: H.Marquardt, D-72oo  Tuttlingen

172 1o1 - DrBi/bp - o6.Nov.1986
Zeichnung - Blatt 2

# FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 962 951 (R. HOLMES) <br> * Insgesamt * | 1,4 | B 60 H 1/00 <br> B 60 H 1/22 |
| X | DE-A-2 110 051 (P. GELSHEIMER) <br> * Patentansprüche 1-3; Figuren 1,2 * | 1,5,6 | |
| X | US-A-2 746 372 (W.E. SMITH et al.) <br> * Figuren 1,2 * | 1,6 | |
| X | US-A-2 925 768 (B.E. WEIBERT et al.) <br> * Insgesamt; Figuren 1,3 * | 1,6 | |
| A | GB-A-1 168 601 (D.E.B. GREENSMITH) <br> * Patentansprüche 1-3; Figuren 1-3 * | 1 | RECHERCHIERTE SACHGEBIETE (Int. Cl.4) <br><br> B 60 H |
| A | AU-A- 45 179 (J.R. BLACKBURN) <br> * Patentanspruch 1; Figur 1 * | 1,6 | |
| A | FR-A-1 507 910 (R. CATALDI) <br> * Insgesamt * | 4 | |

Der vorliegende Recherchenbericht wurde für alle Patentansprüche erstellt.

| Recherchenort | Abschlußdatum der Recherche | Prüfer |
|---|---|---|
| DEN HAAG | 15-06-1987 | SINGER G.M. |